# DEMANDE DE BREVET EUROPEEN

(11) **EP 1 160 210 A1**
(43) Date de publication de la demande: **05.12.2001**
(21) Numéro de dépôt: 01400809.8
(22) Date de dépôt: 29.03.2001
(51) Int. Cl.: C03B 37/027, C03B 37/029

(54) **Procédé d'étirage des fibres optiques à partir d'une préforme**

(30) Priorité: 30.05.2000 FR 0006934
(71) Demandeur: ALCATEL, 75008 Paris (FR)
(72) Inventeur: Desalle, Mickael, 78600 Maisons Laffitte (FR); Dagorne, André, 95610 Eragny sur Oise (FR); Bloas, Jean-Pierre, 78700 Conflans Sainte Honorine (FR); Lainet, Eric, 78600 Maisons Laffitte (FR); Le Bris, Steve, 95100 Argenteuil (FR)
(74) Mandataire: Laroche, Danièle

(57) **Abrégé**

Au cours de l'opération de fibrage d'une préforme, le procédé consiste à augmenter le débit d'argon injecté dans le bas du four de fibrage lorsque la préforme est étirée au niveau d'une soudure entre deux tronçons de la préforme. De la sorte, il est évité une augmentation excessive du diamètre de la fibre résultante et/ou une variation excessive de la vitesse de tirage en raison de la soudure.

## Description

La présente invention concerne un procédé de fibrage pour transformer une préforme en une fibre optique. En particulier, l'invention concerne un procédé de fibrage permettant de maintenir constant le diamètre de la fibre optique malgré des irrégularités affectant la préforme telles qu'une soudure entre deux tronçons de la préforme.

Le processus de fabrication d'une fibre optique comprend traditionnellement la fabrication d'une préforme, puis la transformation de cette préforme en une fibre. L'opération de fibrage, c'est-à-dire la transformation de la préforme en fibre, se fait traditionnellement dans une installation, appelée tour de fibrage, dans laquelle la préforme est transformée par étirage sans contact, par fusion de l'extrémité de la préforme dans un four à induction, rempli de gaz inerte, à savoir de l'argon et de l'hélium. La préforme est introduite dans le four de fibrage à une vitesse appelée vitesse de descente de la préforme. La fibre résultante est tirée à la sortie de la tour de fibrage par un cabestan à une vitesse appelée vitesse de tirage et avec un effort de traction appelé tension de tirage. Le diamètre de la fibre est mesuré à la sortie du four pour asservir la vitesse de tirage afin de maintenir le diamètre de la fibre constant. La vitesse de fibrage peut atteindre plus de 15 m/s. A la sortie du four de fibrage, la fibre optique est immédiatement enduite d'un revêtement primaire, en général une résine, dont le diamètre extérieur est déterminé par une filière que traverse la fibre. Parfois, il est appliqué en plus un revêtement secondaire suivant le même principe.

Pour réaliser une fibre optique de très grande longueur, on réalise une préforme longue en soudant bout à bout deux ou plusieurs préformes, avant de procéder au fibrage.

La soudure au niveau de l'assemblage de deux préformes successives rend délicat l'opération de fibrage.

En particulier, la soudure provoque des casses de la fibre et des variations importantes de la vitesse d'étirage et du diamètre de la fibre résultante. Les variations importantes de la vitesse d'étirage ont pour inconvénients d'engendrer des variations de diamètre des revêtements de résine primaire et éventuellement secondaire appliqués en ligne à la fibre à la sortie de la tour de fibrage. Les variations de diamètre de la fibre optique résultante ont pour inconvénients d'engendrer des variations des caractéristiques de propagation optique de la fibre. Dans certains cas, ces variations importantes de vitesse peuvent engendrer une destruction irréversible du ménisque au niveau de l'enduction - dans ce cas de figure, la seule solution consiste à redémarrer le fibrage.

Pour éviter la casse de la fibre lors de l'étirage d'une soudure de la préforme, la solution de l'art antérieur consiste à limiter la vitesse de fibrage. Cette solution a pour conséquence une augmentation temporaire du diamètre de la fibre résultante lors de l'étirage de chaque soudure de la préforme. Mais la tendance contemporaine est à l'augmentation du diamètre des préformes, ce qui rend cette solution inadaptée. En particulier, au maximum de la perturbation engendrée par la soudure, le diamètre de la fibre résultante avoisine le diamètre critique de la filière de l'applicateur du revêtement primaire, ce qui a pour effet de provoquer la casse de la fibre.

La présente invention a pour but d'éliminer les inconvénients de l'art antérieur.

A cette fin, la présente invention propose un procédé de fibrage d'une préforme, comprenant :
- l'étirage en une fibre de l'extrémité de la préforme chauffée ;
- l'injection d'au moins un premier gaz au voisinage de la partie chauffée de la préforme ;
caractérisé par une variation du débit d'injection du premier gaz en présence d'une irrégularité de la préforme.

La préforme peut présenter une soudure entre deux tronçons, l'irrégularité étant constituée de la soudure.

La variation du débit d'injection du premier gaz en fonction du temps se fait avantageusement suivant une courbe prédéterminée.

De préférence, la variation du débit d'injection du premier gaz s'effectue à une vitesse inférieure à 4 litres/min par seconde, de préférence à une vitesse inférieure à 1 litre/min par seconde.

Selon un mode de réalisation préféré, le premier gaz injecté est de l'argon et l'étape de variation du débit d'injection comprend :
- l'augmentation du débit d'argon injecté en présence d'une irrégularité de nature à augmenter le diamètre de la fibre lorsque toutes choses sont égales par ailleurs ; ou
- la diminution du débit d'argon injecté en présence d'une irrégularité de nature à diminuer le diamètre de la fibre lorsque toutes choses sont égales par ailleurs.

Dans ce cas, la variation du débit d'injection est avantageusement inférieure ou égale à une valeur comprise entre 10 et 20 litres/min.

Selon un autre mode de réalisation préféré, on injecte au moins un deuxième gaz au voisinage de la partie chauffée de la préforme et on varie le débit d'injection du deuxième gaz en sens contraire à la variation du débit d'injection du premier gaz. De préférence, la variation du débit d'injection du deuxième gaz est sensiblement égale en valeur absolue à la variation du débit d'injection du premier gaz. Le deuxième gaz pourra avantageusement être de l'hélium.

Selon encore un autre mode de réalisation préféré, le premier gaz injecté est de l'hélium et l'étape de variation du débit d'injection comprend :
- l'augmentation du débit d'hélium injecté en présence d'une irrégularité de nature à diminuer le diamètre de la fibre obtenue lorsque toutes choses sont égales par ailleurs ; ou
- la diminution du débit d'hélium injecté en présence d'une irrégularité de nature à augmenter le diamètre de la fibre obtenue lorsque toutes choses sont égales par ailleurs.

De façon générale, l'étape de variation du débit d'injection du premier gaz peut présenter avantageusement une durée comprise entre 100 et 350 secondes.

Selon un autre mode de réalisation, le procédé comprend la mesure du diamètre de la fibre, l'étape de variation du débit d'injection du premier gaz s'effectuant en fonction du diamètre mesuré. L'étape de variation du débit d'injection du premier gaz peut avantageusement s'effectuer lorsque le diamètre mesuré atteint une valeur prédéfinie.

Selon encore un autre mode de réalisation, le procédé comprend la régulation du diamètre de la fibre par action sur la vitesse de tirage et la mesure de la vitesse de tirage, l'étape de variation du débit d'injection du premier gaz s'effectuant en fonction de la vitesse de tirage mesurée. L'étape de variation du débit d'injection du premier gaz peut avantageusement s'effectuer lorsque la vitesse de tirage mesurée atteint une valeur prédéfinie.

Selon encore un autre mode de réalisation préféré, le procédé comprend une régulation multivariable de la tension de tirage et de la vitesse de tirage en agissant sur la vitesse de descente de la préforme et/ou sur la puissance de chauffe appliquée à l'extrémité de la préforme.

L'invention est particulièrement avantageuse du fait qu'une variation du débit de gaz inerte ainsi injecté a un effet immédiat - de l'ordre de la seconde - sur le diamètre de la fibre, et par voie de conséquence sur la vitesse de tirage si elle est asservie sur le diamètre de la fibre comme c'est généralement le cas. Il en résulte que l'invention permet de lutter efficacement contre les variations rapides de diamètre qu'engendrent des irrégularités telles que des soudures de la préforme. Au contraire, une action isolée sur la vitesse de descente de la préforme et/ou sur la puissance ne permet pas de lutter efficacement contre de telles variations rapides de diamètre étant donné la dynamique très lente de ces systèmes - environ 10 à 15 minutes pour arriver au nouvel équilibre - en comparaison de celles des perturbations engendrées par une soudure, ainsi que de la durée de ces perturbations.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente graphiquement le diamètre de la fibre en microns (µm) obtenue en fonction du temps en secondes (s) lors de l'étirage de la préforme au niveau d'une soudure, à vitesse de tirage constant.

La figure 2 représente graphiquement d'une part la vitesse de tirage en mètres par minute (m/mn) et d'autre part le diamètre de la fibre obtenue en microns (µm), en fonction du temps en secondes (s), lors de l'étirage de la préforme au niveau d'une soudure, en utilisant une régulation PID.

La figure 3 montre graphiquement les variations de vitesse de tirage en mètres par minute (m/mn) en fonction du temps en secondes (s) en correspondance à des augmentations ou des diminutions de débit d'argon injecté, en utilisant une régulation PID.

La figure 4 illustre les résultats obtenus par la mise en oeuvre d'un mode de réalisation préféré de l'invention.

Des essais de fibrage ont été réalisés sur des préformes longues obtenues par assemblage par soudage bout à bout de plusieurs préformes. Le soudage est réalisé de façon connue en soi. Les essais ont été réalisés sur des préformes longues constituées chacune de cinq préformes - ou tronçons - de 75 mm de long soudées l'une au bout de l'autre. Chaque préforme résultante comprend donc quatre soudures. Le diamètre de la préforme est compris entre 81 et 85 mm. Les essais de fibrage ont été réalisés avec une tour de fibrage comprenant un applicateur de revêtement primaire ayant une filière de 220 *µ*m de diamètre.

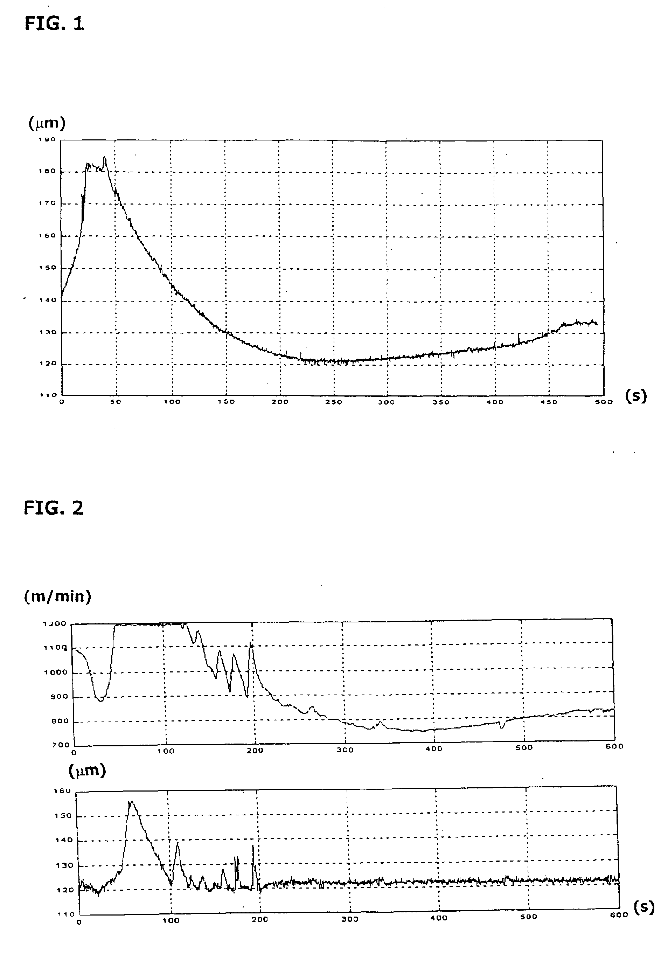

Les premiers essais de fibrages ont été réalisés avec une vitesse de tirage constante à 990 m/min. En résultat, l'on obtient une fibre optique présentant un diamètre constant de 132 *µ*m. Mais durant la période d'étirage de chacune des soudures, le diamètre de la fibre résultante augmente progressivement jusqu'à 185 *µ*m pour revenir ensuite progressivement à 132 *µ*m, la durée de perturbation correspondante étant d'environ 15 minutes. La figure 1 représente graphiquement le diamètre de la fibre obtenue en fonction du temps pour la période correspondant à l'étirage d'une soudure. Ces variations de diamètre de fibre sont trop importantes et entraînent les inconvénients déjà cités.

Des deuxièmes essais de fibrages ont été réalisés avec une régulation sans saturation de type PID - régulation par action proportionnelle, intégrale et dérivée - en agissant sur la vitesse de tirage pour maintenir le plus constant possible le diamètre de la fibre résultante. En résultat, l'on obtient une fibre ayant un diamètre constant de 125 *µ*m. En revanche, durant la période d'étirage de chacune des soudures, la variation du diamètre de la fibre résultante est moindre, le diamètre atteignant un maximum de 155 *µ*m. La durée de perturbation correspondante est également d'environ 15 minutes. En dehors de ces périodes de passage des soudures, la vitesse de tirage est constante, à savoir 990 m/min. Mais durant chacune de ces périodes, en raison de l'action de la régulation PID, la vitesse de tirage varie da façon importante, à savoir l'intervalle de variation de la vitesse de tirage atteint 450 m/min avec un maxima de vitesse à 1200 m/min qui est la vitesse maximale que peut atteindre le cabestan. La figure 2 représente graphiquement d'une part la vitesse de tirage et d'autre part le diamètre de la fibre obtenue, en fonction du temps, pour la période correspondant à l'étirage d'une soudure. En outre, on constate des variations de diamètre des revêtements de résine primaire et secondaire de la fibre dues aux variations de la vitesse de tirage.

La méthode utilisée dans les deuxièmes essais permet de limiter les variations de diamètre de la fibre résultante, néanmoins les variations de vitesse de tirage sont trop importantes pour être acceptables.

De plus, les deux séries d'essais se sont soldées à plusieurs reprises par la casse de la fibre.

La présente invention repose sur le constat que, lors de l'opération de fibrage, la quantité de gaz inerte - en particulier l'argon - injecté dans le bas du four à induction de la tour de fibrage a un impact significatif sur le diamètre de la fibre optique résultante, toutes choses étant égales par ailleurs.

Par bas du four, il faut comprendre la zone du four dans laquelle est effectué l'étirage de la préforme chauffée.

Des essais ont montré qu'à vitesse de tirage constante, l'augmentation du débit d'argon injecté provoque une diminution du diamètre de la fibre résultante et au contraire, une diminution du débit d'argon injecté provoque une augmentation du diamètre de la fibre résultante.

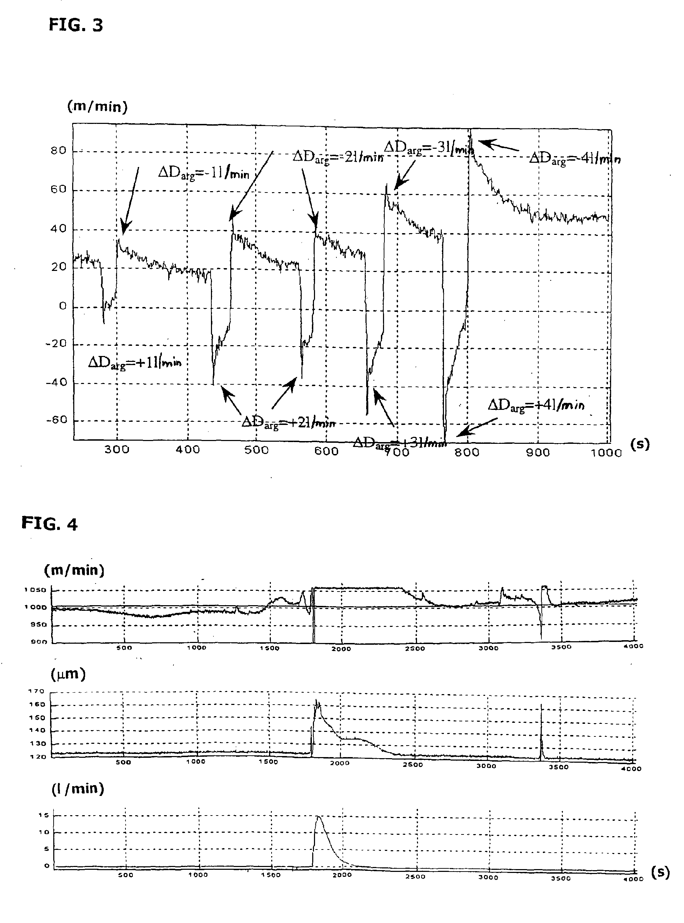

Des essais de fibrage sur des préformes sans soudures ou autres irrégularités dans les conditions des deuxièmes essais précités en faisant varier le débit d'argon injecté dans le bas du four ont également été réalisés. La vitesse nominale de tirage était de 1000 m/min avec un débit d'injection nominal d'argon de 10 litres par minute (I/min). La figure 3 montrent les variations de la vitesse de tirage (en m/min) par rapport à la vitesse de tirage nominale, en fonction du temps (en secondes), en correspondance à des augmentations ou des diminutions de débit d'argon injecté. Les valeurs de ΔD_{arg} sur la figure correspondent à la variation de débit d'argon appliquée par rapport au débit nominal. Ainsi, on obtient par exemple une variation négative de vitesse de tirage atteignant jusqu'à 80 m/min - la vitesse descendant donc jusqu'à 920 m/min - lorsqu'on augmente de débit d'argon injecté de 4 l/min - ce qui porte donc le débit à 14 l/min. La figure 3 montre que la vitesse de tirage augmente avec la diminution du débit d'argon injecté et au contraire la vitesse de tirage diminue avec l'augmentation du débit d'argon. Les variations de vitesse s'expliquent évidemment en raison de la régulation PID qui varie la vitesse de tirage pour compenser les variations de diamètre de la fibre sous l'effet des variations du débit d'argon injecté.

Ces essais ont également montré que la variation du débit d'argon a un impact immédiat sur le diamètre de la fibre. Ainsi a t-on observé, pour les essais illustrés par la figure 3, que les variations de vitesse de tirage suivent l'augmentation ou la diminution du débit d'argon injecté avec un temps de réaction de l'ordre d'une seconde, voire moins.

Des essais similaires réalisées avec l'hélium ont montré que la variation de débit d'hélium injecté dans le bas du four influence également le diamètre de la fibre résultante, mais de manière moins sensible que pour l'argon. A vitesse de tirage constante, la variation du débit d'hélium injecté au bas du four engendre une variation dans le même sens du diamètre de la fibre résultante, au contraire de l'argon.

L'invention consiste à limiter, lors de l'opération de fibrage, les variations du diamètre de la fibre optique résultante et/ou les variations des paramètres de fibrage contrôlés en fonction du diamètre de la fibre optique résultante - tels que la vitesse de tirage ou la vitesse de descente de la préforme - que tendent à engendrer les irrégularités affectant la préforme en variant le débit de gaz inerte - en particulier l'argon - injecté dans le bas du four de fibrage lors du passage de ces irrégularités.

Par irrégularité de la préforme, il faut entendre toute irrégularité de la préforme ayant pour effet, lors du fibrage suivant des conditions constantes dans le temps, d'engendrer une variation du diamètre de la fibre résultante. Il s'agira typiquement des soudures entre les tronçons composant une préforme longue. Il pourra également s'agir de variations de diamètre extérieur de la préforme.

Nous allons décrire maintenant un mode de réalisation préféré de l'invention pour une préforme présentant des soudures du type utilisé pour les essais précités. La tour de fibrage est d'un type connu en soi et correspond à celle utilisée pour les essais précités.

L'étirage de la préforme en dehors des zones comprenant les soudures se fait dans les conditions nominales de fonctionnement suivantes :
- vitesse de tirage : 1000 m/min ;
- tension de tirage : 85 grammes ;
- vitesse de descente de la préforme : 2 mm/min ;
- puissance de chauffe du four de fibrage : 18 KW ;
- débit d'argon injecté dans le bas du four : 10 l/min ;
- débit d'hélium injecté dans le bas du four : 10 I/min ;
- diamètre de la fibre nue - avant application des revêtements de résine - à la sortie de la tour de fibrage : 125 *µ*m.

Plus généralement, il est avantageux que dans les conditions nominales de fonctionnement la vitesse de descente de la préforme soit comprise entre 1 et 3 mm/min, la puissance de chauffe du four soit comprise entre 15 et 25 kW, et le débit d'argon et celui d'hélium injectés dans le bas du four soient chacun compris entre 5 et 20 l/min.

Comme décrit précédemment, l'étirage d'une soudure de la préforme tend à provoquer une augmentation correspondante du diamètre de la fibre optique et/ou une variation de la vitesse de tirage régulée par rapport au diamètre de la fibre résultante. Il est souhaitable de limiter le diamètre de la fibre optique résultante à un maximum de 180 *µ*m tout en limitant la vitesse de tirage à 1050 m/min, pour assurer un fibrage correct, une application correcte du revêtement primaire et une fibre optique ayant des caractéristiques optiques satisfaisantes.

Le contrôle du diamètre de la fibre résultante est réalisé de façon conventionnelle par une première régulation qui agit sur la vitesse de tirage du cabestan pour maintenir le diamètre de la fibre constant. Cette première régulation est de préférence du type à modèle interne. La mesure du diamètre de la fibre à la sortie de la tour de fibrage est réalisée de façon connue en soi. Le modèle interne de la régulation peut être déterminé de façon connue en soi par l'homme du métier à partir d'essais expérimentaux. La régulation à modèle interne peut être remplacée par une régulation de type PID ou toute autre régulation adaptée. Cette première régulation n'est pas nécessaire pour le fonctionnement de l'invention elle-même.

Pour annihiler les variations de diamètre de la fibre lors de l'étirage de la préforme au niveau des soudures, il est choisi d'augmenter le débit d'argon injecté au bas du four durant le passage de la soudure. Alternativement, il serait possible de diminuer la quantité d'hélium injecté au bas du four dans le même but. Mais l'action sur le débit d'argon est plus avantageux car son impact sur le diamètre de la fibre est plus sensible que celui du débit d'hélium. Il est également possible d'agir de manière combinée sur le débit d'argon et sur le débit d'hélium.

Pour augmenter le débit d'argon nominal lors du passage des soudures, il est utilisé un débitmètre supplémentaire d'une capacité maximale de 30 l/min.

La commande du débitmètre supplémentaire pour provoquer l'augmentation du débit d'argon injecté dans le bas du four se fait au moment où la préforme commence à être étirée au niveau d'une soudure. Pour déterminer la survenance de cet événement, il est possible de recourir à une estimation du moment de survenance de celui-ci en fonction du temps écoulé depuis par exemple le début de l'étirage ou du passage d'une soudure précédente. Il est également possible de déterminer la survenance de cet événement lorsque le diamètre de la fibre résultante augmente jusqu'à une valeur de seuil déterminée. Il est encore possible de déterminer la survenance de cet événement lorsque la vitesse de tirage augmente au-delà d'une valeur de seuil, ce qui correspond à une intervention de la première régulation pour combattre l'augmentation de diamètre engendré par la présence d'une soudure. Ces méthodes de détermination de la survenance de cet événement pourront être mis en oeuvre par un système électronique adapté, à la portée de l'homme du métier. Il est avantageux de combiner en conditions cumulatives deux des trois méthodes précitées ou les trois méthodes précitées pour déterminer le moment où une soudure de la préforme commence à être étirée. Dans notre exemple, il a été utilisé une détection de vitesse de tirage atteignant 1050 m/min et une détection de diamètre de fibre atteignant 130 *µ*m.

Lorsque l'arrivée de la soudure est déterminée, une commande est appliquée au débitmètre supplémentaire pour augmenter le débit d'argon injecté au bas du four. Le débit supplémentaire d'argon est déterminé pour maintenir le diamètre de la fibre à son diamètre nominal ou du moins en dessous d'une valeur prédéterminée légèrement supérieure au diamètre nominal. Le débit supplémentaire d'argon peut être déterminé expérimentalement suivant les caractéristiques de la préforme et des conditions nominales de fibrage adoptées. Généralement, il est avantageux d'injecté un débit supplémentaire d'argon compris entre 10 et 20 l/min. Dans notre exemple, il a été déterminé un débit supplémentaire maximal d'argon de 15 I/min. Il est avantageux d'augmenter le débit d'argon progressivement pour ne pas créer de variations brutales de pression dans le four de fibrage qui pourraient perturber l'opération de fibrage. La variation de débit sera de préférence inférieure à 4 I/min par seconde, d'où il résulte que le débit supplémentaire maximal de 15 I/min est appliqué progressivement en plus de 4 secondes. De manière avantageuse, la variation de débit sera de préférence inférieure à 1 I/min par seconde.

Lorsque l'étirage de la préforme au niveau de la soudure est finie, il faut diminuer le débit d'argon injecté à sa valeur nominale. Cette diminution de débit se fera également avantageusement de façon progressive comme pour son augmentation. En fait, il est avantageux de diminuer le débit d'argon dès que l'on détecte une diminution du diamètre de la fibre résultante.

Dans le cas où les soudures d'une préforme, ainsi que les soudures d'une préforme à l'autre, engendrent chacune sensiblement les mêmes perturbations lors du fibrage, la courbe de variation du débit supplémentaire d'argon à injecter en fonction du temps peut être prédéterminée en l'établissant par exemple de façon expérimentale, cette même courbe régissant alors le débit supplémentaire d'argon à injecter au passage de chacune des soudures. Une telle méthode peut être mise en oeuvre en appliquant, lors de la survenance de la perturbation due à une soudure, un échelon de consigne à un filtre numérique du second ordre dont le signal de sortie est appliquée à l'entrée d'un dérivateur. En sortie, l'on obtient un signal ayant un front montant progressivement de zéro jusqu'à une valeur maximale, puis diminuant progressivement - mais plus lentement - jusqu'au au niveau zéro. L'application de ce signal de sortie à l'entrée de commande du débitmètre supplémentaire provoque l'injection d'un débit d'argon selon une courbe de profil identique. Dans notre exemple, le débit supplémentaire maximal de 15 I/min est atteint après 40 secondes à partir de l'initiation de l'augmentation de débit. Le débit supplémentaire revient à zéro au bout d'environ 200 secondes à partir de l'initiation de l'augmentation de débit. De manière générale, la durée de la variation du débit de gaz injecté est avantageusement comprise entre 100 et 350 secondes. La figure 4 illustre la courbe de variation du débit supplémentaire d'argon injecté.

En variante, le débit d'argon peut être varié par une régulation en fonction du diamètre de la fibre optique résultante.

Par ailleurs, il est avantageux d'appliquer une deuxième régulation. Cette deuxième régulation sera de préférence du type multivariable pour réguler à la fois la vitesse de tirage et la tension de tirage en agissant sur la vitesse de descente de la préforme et/ou sur la puissance de chauffe du four de fibrage. Cette deuxième régulation est de préférence de type LQG. De préférence, l'homme du métier définira de façon connue cette deuxième régulation pour qu'elle soit performante, c'est-à-dire qui soit apte à empêcher la vitesse de tirage de dépasser une vitesse maximale donnée lors de l'étirage de la préforme en dehors des zones de soudures. Cette vitesse maximale est la vitesse à laquelle on pourra estimer être en présence d'une soudure en cours d'étirage - 1050 m/min dans notre exemple. Cette deuxième régulation pourra également assurer une limitation des éventuelles variations de vitesse de tirage engendrées par la première régulation lors de l'étirage des soudures.

Par ailleurs, il est avantageux d'appliquer une saturation à la vitesse de tirage de sorte à ce qu'elle ne dépasse pas la vitesse maximale précitée lors du passage des perturbations.

La figure 4 illustre les résultats obtenus dans le cas de notre exemple. L'on constate que le diamètre de la fibre optique a atteint un diamètre maximum de 165 *µ*m au passage de la soudure alors que la vitesse de tirage a été limitée à 1050 m/min, ce qui est un résultat très satisfaisant.

Dans un mode de réalisation préféré, l'augmentation du débit d'argon est compensé par une diminution correspondante du débit d'hélium. Ceci a pour effet de combiner l'action des deux gaz pour maintenir le diamètre de la fibre proche de sa valeur nominale. Mais de plus, il en résulte que la pression des gaz dans le bas du four reste sensiblement constante.

Bien entendu, la présente invention n'est pas limitée aux exemples et au mode de réalisation décrits et représentés, mais elle est susceptible de nombreuses variantes accessibles à l'homme de l'art.

## Revendications

1. Un procédé de fibrage d'une préforme, comprenant :
- l'étirage en une fibre de l'extrémité de la préforme chauffée ;
- l'injection d'au moins un premier gaz au voisinage de la partie chauffée de la préforme ;
**caractérisé par** une variation du débit d'injection du premier gaz en présence d'une irrégularité de la préforme.

2. Le procédé selon la revendication 1, **caractérisé en ce que** la préforme présente une soudure entre deux tronçons, l'irrégularité étant constituée de la soudure.

3. Le procédé selon la revendication 1 ou 2, **caractérisé par** la variation du débit d'injection du premier gaz en fonction du temps suivant une courbe prédéterminée.

4. Le procédé selon l'une quelconque des revendications 1 à 3, **caractérisé en ce que** la variation du débit d'injection du premier gaz s'effectue à une vitesse inférieure à 4 litres/min par seconde, de préférence à une vitesse inférieure à 1 litre/min par seconde.

5. Le procédé selon l'une quelconque des revendications 1 à 4, **caractérisé en ce que** le premier gaz injecté est de l'argon et **en ce que** l'étape de variation du débit d'injection comprend :
- l'augmentation du débit d'argon injecté en présence d'une irrégularité de nature à augmenter le diamètre de la fibre lorsque toutes choses sont égales par ailleurs ; ou
- la diminution du débit d'argon injecté en présence d'une irrégularité de nature à diminuer le diamètre de la fibre lorsque toutes choses sont égales par ailleurs.

6. Le procédé selon la revendication 5, **caractérisé en ce que** la variation du débit d'injection est inférieure ou égale à une valeur comprise entre 10 et 20 litres/min.

7. Le procédé selon l'une quelconque des revendications 1 à 6, **caractérisé par** l'injection d'au moins un deuxième gaz au voisinage de la partie chauffée de la préforme et par une variation du débit d'injection du deuxième gaz en sens contraire à la variation du débit d'injection du premier gaz.

8. Le procédé selon la revendication 7, **caractérisé en ce que** la variation du débit d'injection du deuxième gaz est sensiblement égale en valeur absolue à la variation du débit d'injection du premier gaz.

9. Le procédé selon la revendication 7 ou 8, **caractérisé en ce que** le deuxième gaz est de l'hélium.

10. Le procédé selon l'une quelconque des revendications 1 à 4, **caractérisé en ce que** le premier gaz injecté est de l'hélium et **en ce que** l'étape de variation du débit d'injection comprend :
- l'augmentation du débit d'hélium injecté en présence d'une irrégularité de nature à diminuer le diamètre de la fibre obtenue lorsque toutes choses sont égales par ailleurs ; ou
- la diminution du débit d'hélium injecté en présence d'une irrégularité de nature à augmenter le diamètre de la fibre obtenue lorsque toutes choses sont égales par ailleurs.

11. Le procédé selon l'une quelconque des revendications 1 à 10, **caractérisé en ce que** l'étape de variation du débit d'injection du premier gaz présente une durée comprise entre 100 et 350 secondes.

12. Le procédé selon l'une quelconque des revendications 1 à 11, **caractérisé en ce qu'**il comprend la mesure du diamètre de la fibre et **en ce que** l'étape de variation du débit d'injection du premier gaz s'effectue en fonction du diamètre mesuré.

13. Le procédé selon la revendication 12, **caractérisé en ce que** l'étape de variation du débit d'injection du premier gaz s'effectue lorsque le diamètre mesuré atteint une valeur prédéfinie.

14. Le procédé selon l'une quelconque des revendications 1 à 13, **caractérisé en ce qu'**il comprend la régulation du diamètre de la fibre par action sur la vitesse de tirage et la mesure de la vitesse de tirage et **en ce que** l'étape de variation du débit d'injection du premier gaz s'effectue en fonction de la vitesse de tirage mesurée.

15. Le procédé selon la revendication 14, **caractérisé en ce que** l'étape de variation du débit d'injection du premier gaz s'effectue lorsque la vitesse de tirage mesurée atteint une valeur prédéfinie.

16. Le procédé selon l'une quelconque des revendications 1 à 15, **caractérisé par** une régulation multivariable de la tension de tirage et de la vitesse de tirage en agissant sur la vitesse de descente de la préforme et/ou sur la puissance de chauffe appliquée à l'extrémité de la préforme.
